# EUROPEAN PATENT APPLICATION

(11) **EP 1 886 928 A1**
(43) Date of publication of application: **13.02.2008**
(21) Application number: 06425574.8
(22) Date of filing: 07.08.2006
(51) Int. Cl.: B65D 21/02, A47J 47/16

(54) **Support for separating and stacking kitchen containers**

(71) Applicant: Tosini, Giorgio, 24060 Credaro (BG) (IT)
(72) Inventor: Tosini, Giorgio, 24060 Credaro (BG) (IT)
(74) Representative: Garavelli, Paolo

(57) **Abstract**

Separator (1) of at least two kitchen containers stacked one above the other, equipped with abutment and containment members that are resiliently connected, generating a sort of resilient mechanism capable of keeping the containers connected due to friction forces developed by the weight of the upper container. The invention allows increasing the number of vertically stacked containers, due to the lateral stability increase; the separator (1) is made of plastic and in resilient material for foodstuff use.

## Description

The present invention deals with a support adapted to keep kitchen pans vertically separated and stacked, in particular containers for cooking, freezing or storing foodstuffs.

The prior art deals with: (B65D6/00): Containers having bodies formed by interconnecting or uniting two or more rigid, or substantially rigid, components made wholly or mainly of metal, plastics, wood or substitutes therefor; containers provided with deformable or movable parts (B65D6/12: with walls, e.g. bottoms, movable under influence of contents); containers equipped with devices adapted to enable their stacking (B65D21/02: Containers specially shaped, or provided with fittings or attachments, to facilitate nesting, stacking, or joining together).

In the above cited categories, there are supports and separators of kitchen containers or pans, partially or completely flexible, made of elastic material, used for cooking, freezing and storing foodstuffs.

The prior art, represented in particular by document EP-A-1486122, deals with a support made of silicone formed of a plane horizontal portion on which the upper container bottom abuts, the supporting walls being equipped with grooved outlines in which the thin edge of the lower container wall is placed.

Object of the present invention is providing a separating support for kitchen pans adapted for cooking, freezing or storing foodstuffs, that, in addition to the supporting and stacking functions already common in the above described prior art, solves the instability problem causes by a high number of vertically stacked containers.

Such innovative support is a sort of resilient mechanism that, due to the weight effect of an upper container, is deformed creating a friction force between the walls of two contiguous, vertically stacked containers, such friction force contributing to the increase of the side stability of the stack of containers.

The above and other objects and advantages of the invention, as will appear from the following description, are obtained with a separating support as claimed in Claim 1. Preferred embodiments and non-trivial variations of the present invention are the subject matter of the dependent claims.

The present invention will be better described by some preferred embodiments thereof, provided as a non-limiting example, with reference to the enclosed drawings, in which:

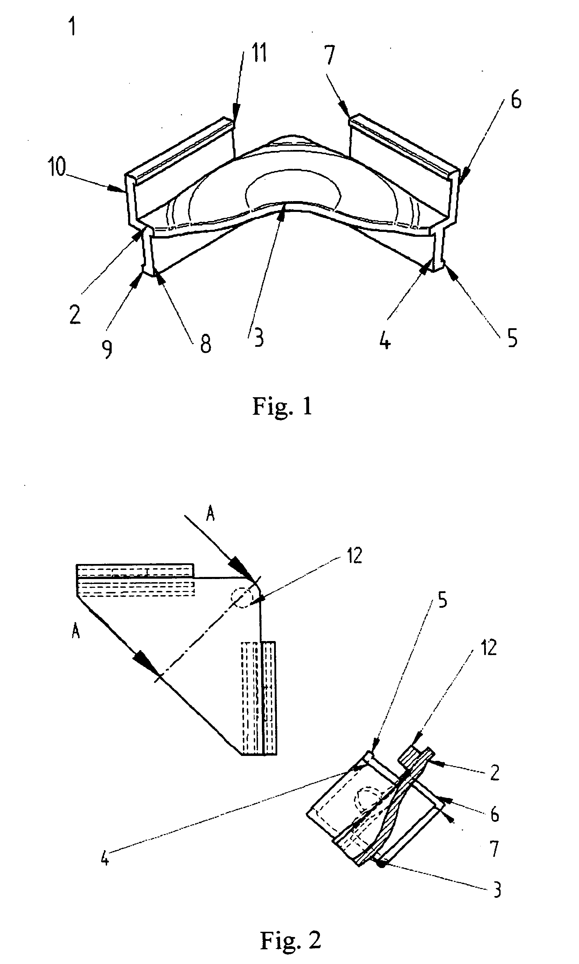

- figure 1 is an axonometric view of the device adapted for separating and keeping the containers stacked;
- figure 2 is a plan view with related cross section of the device adapted for separating and keeping the containers stacked;

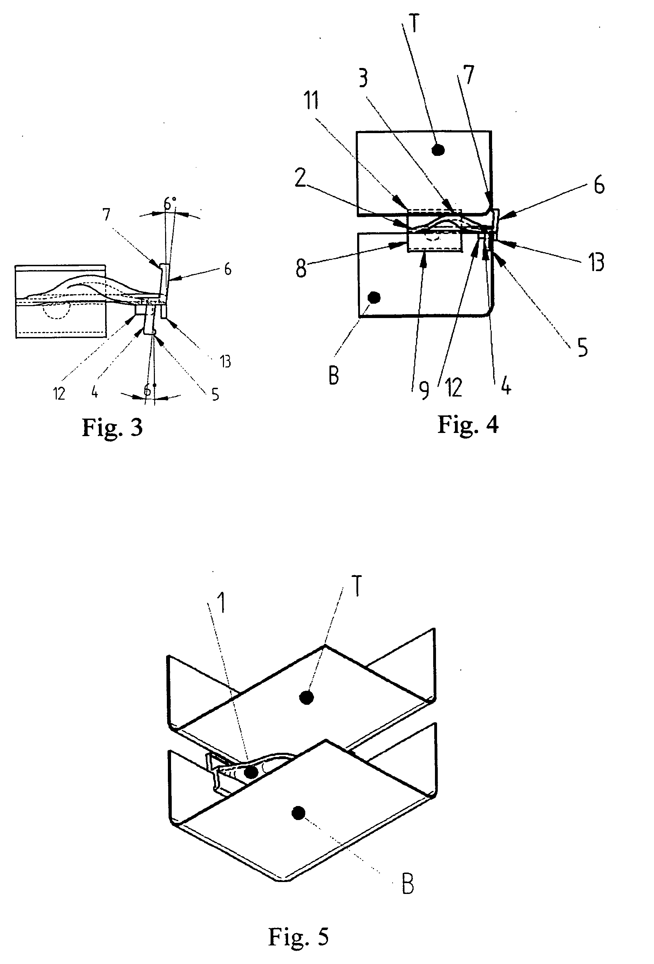

- figure 3 is an orthogonal projection view of the device equipped with vertical walls for keeping two containers stacked;
- figure 4 is an orthogonal projection view of the device and of the angular portion of two containers, the upper container pressing and deforming the concave device portion;
- figure 5 is an axonometric view of a device and the related portion of containers of fig. 4.

A container for foodstuffs, used in a kitchen for heating, cooking, freezing, or simply letting its contents ferment, is generally metallic, with a uniform thin thickness, of the type comprising a plate base whose size is approximately rectangular, delimited by vertical walls, its edges being rounded. Generally, it is common to stack at least two containers, a lower one B and an upper one T, by means of separating members 1 applied next to each angle of the lower container B.

The support of the invention comprises a horizontal angular frame 2 from which, according to the same rake angle of about 6° with respect to the vertical line, the walls 4 and 8 project from the bottom, and walls 6 and 10 project from the top.

The horizontal angular frame 2 delimits a portion of area 3, that is realised in order to be a concave surface, a protuberance, projection or upward bulge, namely towards the upper container T.

A lip 7 and 11 extends along the section of wall 6 and 10 going out of the angular frame 2; such lip reinforces the wall itself and abuts against the external wall of the upper container T.

A lip 5 and 9 extends along the section of wall 4 and 8 going out of the angular frame 2; such lip reinforces the wall itself and performs an abutting action against the internal wall of the lower container B.

The angular support 1 comprises engagement members 12 and 13 with respect to the edge of the lower container B. The only function of these engagement members 12 and 13 is guaranteeing a temporary anchoring of the support 1 to the edges of the lower container B in the steps in which there is no upper container T: the projection 12, whose overall sizes are contained in the curvature radius of the vertical container edge rounding, goes out of the angular frame 2 in a point along the bisectrix passing from the angular frame 2 vertex; the pair of small ears 13 project from the two lower edges of the angular frame 2. Both the projection 12, and the small ears 13 allow the temporary anchoring of the separator 1 to the lower container B, removing the danger of fall of the separator 1 itself inside the lower container B during the steps of handling the containers, in particular when they are mutually stacked.

During the step of stacking the upper container T with respect to the lower container B, the upper container T squashes the concave surface 3, this latter one being arranged at the end of its squashing along an approximately plane surface on which the upper container T bottom rests; simultaneously and following the elastic distortion occurred to the portion of concave surface 3, the angular frame 2 is subjected to a rotation along its two backs dragging, in the same rotation, the walls connected thereto. In particular:
- the upper walls 6, 10, through their respective reinforcing lips 7, 11, press against the external vertical wall of the upper container T;
- the lower walls 4, 8, through their respective reinforcing lips 5, 9, press against the internal vertical wall of the lower container B.

The above described device obtains the object of separating at least two kitchen containers and, simultaneously, of keeping the formed stack laterally stable, allowing to highly increase the number of stacked containers one with respect to the other; it also allows keeping the necessary stability when handling them, due to the resilient work performed by the slanted vertical walls of the device of the invention; in fact, the angular frame 2 rotation implies the rotation of the slightly slanted walls with respect to the vertical line, triggering the necessary distortion work for seizing the walls, namely the internal wall of the lower container B and the external wall of the upper container T.

The resilient separator 1 is made of plastic, preferably resilient deformable material, of the known type in the foodstuff field according to directives in force. In particular, reference is made to a thermoplastic material, silicone, elastomer; in this case: platinum silicone, particularly adapted for freezing at -50°C and cooking at 300°C; peroxide silicone; elastomer adapted for cooking at 300°C and freezing at -50°C.

A heat-colouring pigment, added to the basic material, allow realising a separator 1 that is able to point out the temperature of the environment in which it is immersed or the temperature of the container with which it is in contact.

## Claims

1. Separator (1) for at least two kitchen containers stacked one above the other, of a type comprising engagement or fastening members (4, 8, 6, 10) with respect to the walls of a lower container (B) and of an upper container (T), comprising a surface (3) on which the bottom of the upper container (T) abuts, **characterised in that** said surface (3) is adapted to exert a force against the upper container (T) and **in that** said engagement or fastening members (4, 8, 6, 10) are adapted to exert side thrusts on the walls of the two, lower (B) and upper (T) containers.

2. Separator (1) according to claim 1, **characterised in that** said surface (3) is structurally connected to said engagement or fastening members (4, 8, 6, 10) forming a resilient mechanism able to rotate along the sides of an angular frame (2).

3. Separator (1) according to claim 1 or 2, **characterised in that**, when there are no forces and thrusts, the surface (3) is adapted to assume the shape of an upward projecting, concave surface, while the engagement or fastening members (4, 8, 6, 10) are adapted to slightly diverge with respect to the walls of the containers (B),(T).

4. Separator (1) according to claim 3, **characterised in that** the weight of the upper container (T) pushing onto the surface (3) is adapted to make the surface (3) flatten and the engagement or fastening members (4, 8, 6, 10) close as regards the walls of the containers (B),(T).

5. Separator (1) according to any one of the previous claims, **characterised in that** the engagement or fastening members (4, 8, 6, 10) are smooth walls.

6. Separator (1) according to any one of claims 1 to 5, **characterised in that** the engagement or fastening members (4, 8, 6, 10) are respectively equipped with reinforcing lips (7, 11, 5, 9).

7. Separator (1) according to any one of the previous claims, **characterised in that** it comprises temporary anchoring members (12, 13) with respect to the edge of the lower container (B).

8. Separator (1) according to any one of the previous claims, **characterised in that** it is made of plastic.

9. Separator (1) according to any one of claims 1 to 7, **characterised in that** it is made of thermoplastic plastic material.

10. Separator (1) according to any one of claims 1 to 7, **characterised in that** it is made of silicone or platinum silicone or peroxide silicone.

11. Separator (1) according to any one of claims 1 to 7, **characterised in that** it is made of elastomer material.

12. Separator (1) according to any one of the previous claims, **characterised in that** it is made of a resilient material adapted for cooking at 300°C and freezing at -50°C.

13. Separator (1) according to any one of the previous claims, **characterised in that** thermo-colouring pigments, adapted for pointing out the temperature of the environment in which they are immersed or for pointing out the temperature of the material with which they are in contact, are additional ingredients for the basic material.
